# FASCICULE DE BREVET EUROPEEN

(11) **EP 0 925 231 B1**
(45) Date de publication et mention de la délivrance du brevet: **27.06.2001**
(21) Numéro de dépôt: 97937647.2
(22) Date de dépôt: 21.08.1997
(51) Int. Cl.: B65D 77/20, B65D 51/18

(54) **COUVERCLE CONSTITUE DE DEUX PARTIES**
ZWEITEILIGER DECKEL
LID CONSISTING OF TWO PARTS

(30) Priorité: 03.09.1996 FR 9610712
(43) Date de publication de la demande: 30.06.1999
(73) Titulaire: SOPLARIL SA, 92800 Puteaux (FR)
(72) Inventeur: CHARPENTIER, Gérard, F-40140 Soustons (FR)
(74) Mandataire: Michardière, Bernard
(86) Numéro de dépôt international: FR9701511
(87) Numéro de publication internationale: WO9809885

(56) Documents cités:
- DE-A- 1 536 193
- DE-A- 2 534 748
- DE-A- 2 718 234
- GB-A- 2 081 229
- LU-A- 52 325
- US-A- 3 420 397
- US-A- 4 350 263
- US-A- 5 181 626

## Description

La présente invention a pour objet un couvercle en matière plastique destiné en particulier, mais non exclusivement, aux récipients en matière plastique à usage alimentaire.

Les emballages de produits alimentaires en matière plastique sont, d'une manière générale, fermés par un couvercle, un opercule ou par un opercule et un couvercle. Ces fermetures doivent assurer des fonctions diverses :
- inviolabilité ou manifestation physique d'une première ouverture;
- étanchéité pour protéger la matière du contact externe;
- réemploi pour permettre une consommation du produit en plusieurs fois, le récipient étant refermé par le couvercle;
- résistance mécanique pour:
   - un bon empilage des couvercles;
   - un bon désempilage( prélèvement des couvercles à partir d'un empilage);
   - une possibilité de gerbage en disposant des récipients remplis les uns sur les autres;
   - écobilan favorable ( monomatériau et gain de poids);
   - bilan économique favorable;
   - décoration ou inscription de renseignements réglementaires divers.

Pour assurer l'étanchéité et l'inviolabilité, il est connu de procéder , après remplissage du récipient, à la pose et au scellage d'un opercule ( en feuille d'aluminium, de papier ou de matière plastique), puis à la pose d'un couvercle clipsé sur le récipient.

Des tentatives ont été effectuées pour substituer à l'opercule et au couvercle un seul dispositif de fermeture scellé apte, après ouverture du scellage, à refermer le récipient après chaque prélèvement du contenu au cours de la consommation.

Toutefois, ces tentatives n'ont pas abouti de manière satisfaisante notamment en raison de l'épaisseur nécessaire à de tels dispositifs de fermeture pour satisfaire aux exigences de résistance mécanique. Les scellages se font par thermocompression en amenant contre l'un des éléments une électrode de soudure chauffante sous pression portée à une température de l'ordre de 180 à 200°C en fonction de la nature des matériaux. Compte tenu des efforts mécaniques qu'il doit supporter (empilage, désempilage, gerbage), il faut que le dispositif de fermeture , ou couvercle, présente une épaisseur de l'ordre de 300 micromètres. En raison du temps de diffusion de la chaleur, pouvant dépasser 1,2 seconde, avec une telle épaisseur, ceci est incompatible avec les cadences actuelles de conditionnement des produits.

En outre, la géométrie d'un tel dispositif de fermeture nécessaire pour l'empilage et le désempilage provoque des incidents de fonctionnement des machines automatiques en raison d'emboîtement et de coincement de couvercles empilés. Cette géométrie limite aussi la possibilité de gerbage de récipients remplis fermés avec ces dispositifs.

Le document GB-A-2 081 229 montre un couvercle constitué de deux feuilles, la feuille supérieure étant plane et le couvercle étant thermoscellé par sa feuille supérieure. En cas d'empilage ou de gerbage, il n'y a pas de moyen de centrage relatif entre les éléments superposés. Un gerbage éventuel ne sera pas sécurisé.

Le document US-A-3 420 397 montre un couvercle formé d'une seule feuille de matériau qui est encliquetée dans un récipient suivant une partie en contre-dépouille mais qui n'est pas thermoscellée sur le récipient. Lorsque les couvercles sont empilés, le bord périphérique du fond d'un couvercle supérieur vient en appui sur un rebord incliné tronconique d'un bourrelet de verrouillage du couvercle inférieur. Cet appui s'effectue suivant une surface inclinée et non sur un fond intermédiaire de sorte que l'attitude du couvercle supérieur vis-à-vis du couvercle inférieur n'est pas définie de manière sûre et dépend du centrage relatif des deux couvercles. Si un léger décentrage se produit, le couvercle supérieur peut prendre une certaine inclinaison relativement au couvercle inférieur. Dans le cas d'un empilage de nombreux cousercles, ceci peut conduire à une pile dont la verticalité n'est pas satisfaisante.

La présente invention a pour objet surtout de résoudre les problèmes exposés précédemment et de fournir un couvercle satisfaisant mieux que jusqu'à présent aux diverses exigences énoncées.

Selon l'invention, un couvercle, notamment pour récipient en matière plastique, est constitué d'un élément en film thermoscellable mince pelable, et d'un autre élément, les deux éléments étant assemblés l'un avec l'autre, l'élément en film thermoscellable recouvrant au moins partiellement, d'un côté, l'autre élément et débordant de celui-ci, et est caractérisé en ce qu'il comporte une partie creuse ouverte vers le haut avec un fond intermédiaire, et une zone d'appui inférieure destinée, dans un empilage de couvercles, à reposer contre le fond intermédiaire d'un couvercle inférieur, la profondeur de la partie creuse étant inférieure à la hauteur de la zone d'appui, le diamètre extérieur de cette zone d'appui étant légèrement inférieur au diamètre intérieur de la partie creuse.

Les éléments peuvent être assemblés par encliquetage dans des zones respectives, en particulier du type bourrelet et rainure conjuguée, ou peuvent être assemblés par soudage, en particulier lors de la pose du couvercle sur un récipient et du scellage de l'élément en film thermoscellable sur une collerette du récipient.

Selon un mode de réalisation, l'autre élément constitue un élément inférieur, et le fond de cet élément est surélevé pour venir en contact avec le fond de l'élément en film thermoscellable.

Selon un autre mode de réalisation, le fond de l'autre élément présente un moyen de préhension en saillie, cet autre élément se trouvant au-dessus du fond de l'élément en film thermoscellable.

Le couvercle peut comporter, sur sa périphérie, un bourrelet propre à être inséré dans une gorge du récipient destiné à être fermé par ce couvercle. Le bourrelet peut être prévu à la périphérie de l'élément en film thermoscellable, l'intérieur de ce bourrelet définissant une rainure dans laquelle est insérée la périphérie de l'autre élément.

Cet autre élément peut présenter la forme d'un disque. Avantageusement, à la périphérie du disque, une languette fait saillie sensiblement perpendiculairement au plan du disque.

De préférence, une chambre est formée, après assemblage, entre les éléments.

Dans un couvercle constitué d'un élément en film thermoscellable mince pelable et d'un autre élément, les deux éléments peuvent être assemblés et conformés selon une structure présentant une rigidité relativement élevée, alors que les éléments ont une épaisseur relativement faible. L'épaisseur cumulée des deux éléments peut être inférieure à 220 *µ*m.

Avantageusement, un corps creux est formé entre les deux éléments dont les fonds sont écartés l'un de l'autre, au moins dans des zones partielles, suivant une direction perpendiculaire à leur plan moyen.

Le couvercle peut comporter, sur sa partie inférieure, une nervure périphérique dirigée vers le bas. Les parois périphériques du couvercle peuvent être des parois cylindriques de génératrices parallèles à l'axe du couvercle.

L'invention est également relative à un récipient fermé par un couvercle tel que défini précédemment, et caractérisé en ce que la partie de l'élément en film thermoscellable, qui déborde de l'autre élément, est seule soudée à une collerette du récipient.

La paroi du récipient peut comporter une rainure d'encliquetage du couvercle permettant, après retrait du couvercle pour prélèvement d'une partie du contenu du récipient, de remettre en place le couvercle et d'assurer une fermeture du récipient.

D'autres caractéristiques et avantages de la présente invention apparaîtront au cours de la description qui va suivre de modes particuliers de réalisation, donnés uniquement à titre d'exemple non limitatif, en regard des dessins qui représentent :
- la figure 1, une vue de l'élément en film thermoscellable du couvercle en coupe verticale;
- la figure 2, une vue de l'autre élément du couvercle;
- la figure 3, le couvercle formé par les deux éléments ci-dessus assemblés;
- la figure 4, l'empilage de plusieurs couvercles;
- la figure 5, le gerbage de pots ou récipients;
- la figure 6, une variante de réalisation;
- la figure 7, un autre mode de réalisation;
- la figure 8, un schéma en coupe partielle du scellage sur un récipient;
- la figure 9, une vue en demi-coupe d'un autre mode de réalisation.
- la figure 10, une vue semblable à la figure 3 d'une variante avantageuse du couvercle selon l'invention ;
- la figure 11, enfin, une vue en coupe à échelle réduite d'un empilage de trois couvercles selon la figure 10.

L'invention est indépendante de la forme du récipient mais les exemples qui seront décrits ci-dessous se rapporteront à un récipient habituel, sensiblement tronconique et à symétrie de révolution.

De plus , pour faciliter la lecture des dessins, les épaisseurs des éléments du couvercle ont été représentées à une échelle très supérieure à l'échelle des autres parties des dessins.

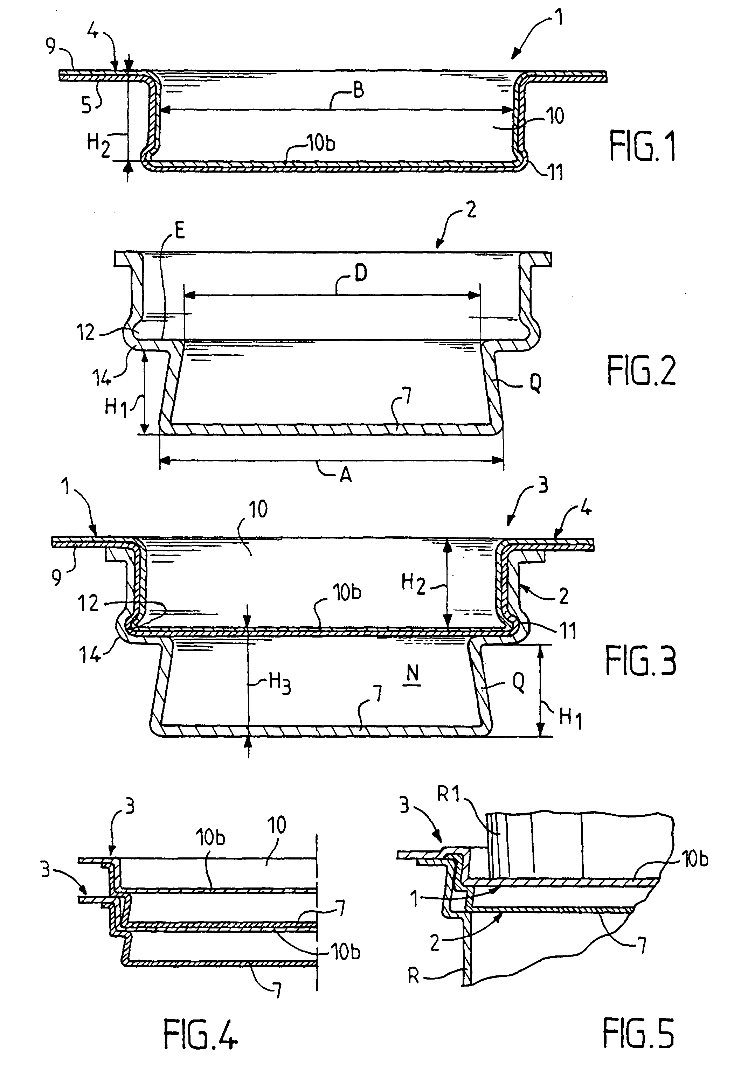

Sur la figure 1, est représentée la partie supérieure 1 du couvercle qui est constituée par une feuille mince 4, par exemple bicouche, conformée dont la partie inférieure est revêtue d'une couche 5 de matériau de scellage du type "hot-melt". Elle présente un fond lOb dans une cavité centrale 10. Le bord inférieur de la paroi entourant la cavité 10 comporte un bourrelet périphérique 11. Sur l'un des côtés de la partie 1 fait saillie une extension 9 destinée à constituer une patte d'arrachage.

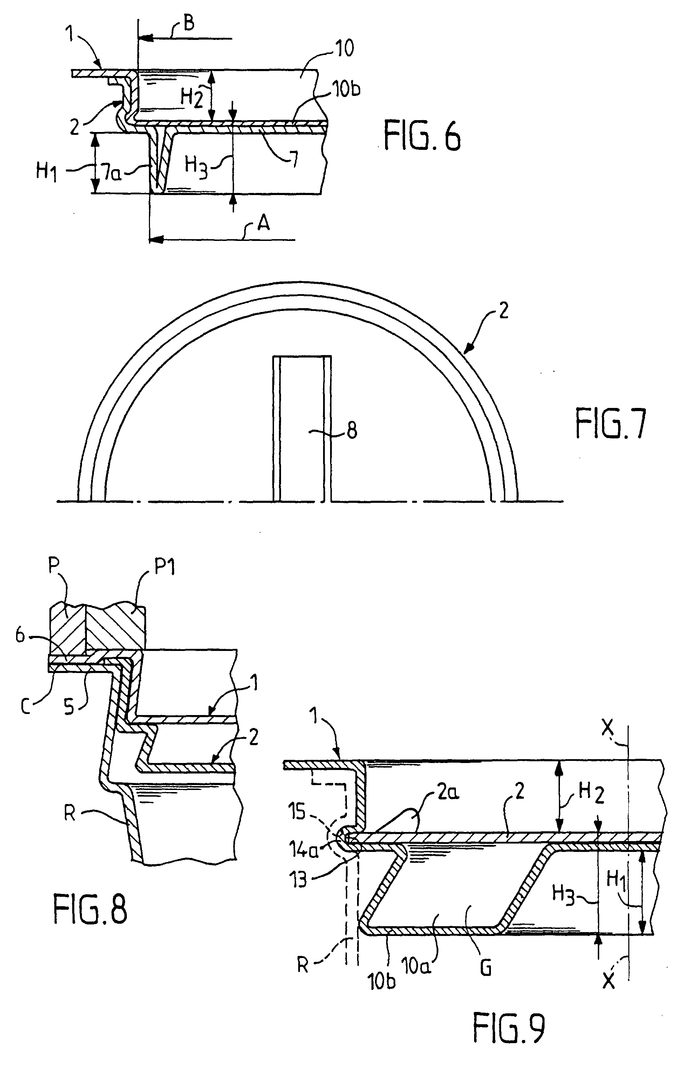

On peut réaliser le couvercle soit en logeant la partie 1 dans une autre partie 2, comme dans le cas des figures 3, 6 et 10 par exemple, soit en logeant l'autre partie 2 dans la partie 1, comme dans le cas de la figure 9. Dans ce dernier cas , la solidarisation des parties 1 et 2 doit être appropriée pour éviter une séparation accidentelle ou intentionnelle.

L'autre partie 2 du couvercle est représentée sur la figure 2. Elle est destinée à donner une bonne rigidité au couvercle . La partie 2 contribue à la résistance mécanique de l'ensemble pour qu'il supporte les efforts qui peuvent s'exercer sur la surface supérieure du récipient, notamment lors du gerbage de plusieurs récipients. La partie ou élément 2 présente un fond 7 et, sensiblement à mi-hauteur, une cavité périphérique 12 formant une gorge destinée à recevoir le bourrelet 11 qui vient s'y encliqueter.

Il est à noter que le bourrelet 11 et la gorge 12 ne sont pas nécessaires lorsque les parties 1 et 2 sont assemblées par soudage soit avant , soit pendant, la pose sur le récipient.

La figure 3 représente le couvercle assemblé désigné d'une manière générale par la référence 3. En fonction de l'usage ultérieur, l'encliquetage des zones 11, 12 peut être plus ou moins léger.

Un corps creux N de rigidification est délimité par les fonds 10b et 7, écartés l'un de l'autre suivant une direction perpendiculaire à leur plan moyen, et la paroi périphérique Q de la région inférieure de la partie 2.

Comme cela apparaît sur la figure 8, le scellage est effectué sur la partie externe 6 de la couche 5. Ce scellage est effectué sur la collerette C du récipient R. La panne de soudure P chauffe, sous pression, la zone 6 de la couche 5 qui se soude sur la collerette C. Il est également possible d'utiliser une panne P1 plus large pour souder latéralement les deux parties 1 et 2 du couvercle qui deviennent ainsi indissociables.

La figure 4 représente un empilage de couvercles 3 selon l'invention, et montre qu'il n'y a pas de risques d'encastrement ou de coincement, ce qui est essentiel dans le cas d'un désempilage automatique.

Sur la figure 5, un récipient R1 prend appui sur le couvercle 3 qui n'est pas flexible ce qui assure une stabilité de la base du récipient supérieur R1, le couvercle 3, composé de deux éléments 1,2 assemblés présentant la rigidité nécessaire.

Comme cela apparaît sur la figure 6, le fond 7 de l'élément inférieur 2 du couvercle peut être pistonné ou retourné, les fonds des deux éléments venant en contact ce qui assure une meilleure rigidité et un meilleur gerbage. Une nervure périphérique 7a en saillie vers le bas est formée par un repli et contribue d'une part à rigidifier le couvercle, d'autre part à améliorer l'empilage en servant d'appui .

Dans le cas où un produit ou un élément est inséré entre les deux parties 1 et 2, après une première ouverture, l'élément supérieur 1 est détaché de l'élément inférieur 2 et est jeté. L'élément inférieur 2 peut constituer un couvercle réutilisable. Il est alors souhaitable de prévoir, comme représenté sur la figure 7, un moyen de préhension tel qu'une nervure 8 radiale sur le fond 7.

Après remplissage du récipient, le couvercle 3 est scellé sur la collerette dudit récipient comme représenté sur la figure 8. A première ouverture, le consommateur tire sur la languette 9 qui est pelable et retire l'ensemble 3 de couvercle, dégageant ainsi l'ouverture du récipient. Le couvercle 3 peut alors être remis en place en vue d'assurer la fermeture jusqu'à une autre utilisation du produit se trouvant à l'intérieur.

La production des éléments 1 et 2 peut être extrêmement rapide car en feuille mince (épaisseur inférieure à 200 micromètres).

La production du couvercle composite selon l'invention est légèrement compliquée par la nécessité d'encliqueter ou d'associer les parties 1 et 2 avant livraison et utilisation. Trois cas de figure sont possibles:
1/ on produit la partie 2 séparément ; on produit plusieurs parties 1 dans une feuille mince, on emboîte les parties 2 dans les parties 1, puis on découpe les parties 1 à partir de la feuille mince, et on empile les couvercles, chacun étant formé par l'ensemble des deux parties 1 et 2 ;
2/ on produit les parties 1 et 2 ensemble dans une même feuille mince, dans des rangées ou colonnes parallèles de parties 1 et de parties 2 en même nombre; puis on découpe les parties 1 et 2 et on les associe par emboîtement et/ou soudure. Les parties 1 et 2 sont alors produites avec la même feuille mince thermosoudable.
3/ on produit les parties 1 et 2 séparément et on les assemble sur un équipement extérieur indépendant. Cette solution est plus onéreuse au plan de l'exploitation.

Dans une production correspondant aux cas de figure 1/ et 3/ ci-dessus, la paroi périphérique Q de la partie basse de l'élément 2 du couvercle est en contre-dépouille comme expliqué plus loin.

On peut imprimer les films ou feuilles minces à des conditions plus économiques que dans le cas d'une feuille épaisse.

La figure 9 représente un autre mode de réalisation dans lequel l'élément 2 contribuant à la résistance mécanique est réduit à un simple disque qui est encliqueté dans une rainure 13 périphérique de l'élément 1, un bourrelet correspondant 14a de l'élément supérieur 1 s'insérant, lors de la fermeture, dans une gorge 15 du récipient R. Comme précédemment, l'élément 1 est un complexe thermoscellable dont l'épaisseur est de 100 micromètres environ. Le disque 2 peut être encliqueté soit avant, soit après la pose de l'élément 1 sur le récipient R, suivie du scellage. Ce disque 2 constitue un insert rigide, en carton ou en matière plastique.

Le mode de réalisation de cette figure 9 convient bien pour produire en ligne, sur la machine de remplissage du récipient , la partie 1, la souder après remplissage du récipient et pour y loger l'insert /disque 2.

Il est possible de se servir de l'élément 2 comme organe de verrouillage mécanique, comme illustré sur la Figure 9. Une languette 2a sensiblement perpendiculaire au plan du disque 2 est alors prévue pour déverrrouiller et extraire le disque 2.

Le couvercle 3 peut être constitué d'une pièce à double paroi avec présence d'une chambre annulaire périphérique 10a . Le fond de l'élément 1 est conformé avec une gorge périphérique G, à section transversale ouverte vers le haut, qui est fermée par le disque 2 pour réaliser la chambre annulaire 10a. Il est possible d'introduire dans la chambre 10a, entre les éléments 1 et 2, un produit tel qu'un ingrédient ou un objet utilitaire tel qu'une fourchette ou cuillère, soit encore une notice publicitaire ou informative.

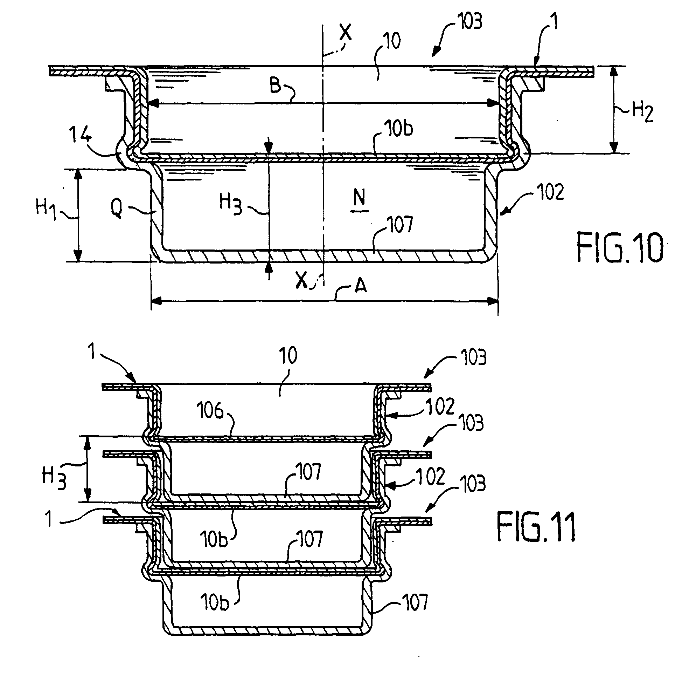

La figure 10, montre semblablement à la figure 3, une variante avantageuse du couvercle selon l'invention. Les éléments du couvercle de la figure 10, identiques ou semblables à des éléments déjà décrits à propos des figures précédentes, seront désignés par les mêmes références numériques, auxquelles le nombre 100 sera éventuellement ajouté. Leur description ne sera pas reprise en détail.

La différence principale entre le couvercle assemblé 103 de la figure 10 et le couvercle 3 de la figure 3 se situe au niveau de l'élément 102 constituant la partie inférieure du couvercle. La paroi périphérique basse Q de cette partie 102 est cylindrique, avec ses génératrices parallèles à l'axe X-X du couvercle. En particulier, lorsque le couvercle est fabriqué en ligne ( parties 1 et 2 associées), il n'y a plus besoin de contre-dépouille.

Dans le cas de la figure 3, la paroi périphérique Q est en contre-dépouille, c'est-à-dire qu'elle a une forme tronconique, ses génératrices étant inclinées sur l'axe du couvercle et la grande base du tronc de cône étant située en partie basse .

La partie 102 du couvercle 103 de la figure 10 est plus simple à mouler.

Le diamètre extérieur A de la paroi Q, sur les figures 2 et 10, est légèrement inférieur au diamètre intérieur B de la cavité 10 de l'élément supérieur 1, de sorte que la partie basse de l'élément 2,102 limitée par la paroi Q peut être introduite, avec un jeu radial réduit mais sans coincement, dans le creux 10 d'un couvercle 3,103 inférieur, comme illustré sur les figures 4 et 11, pour réaliser un empilage.

De préférence la hauteur H1 entre la face inférieure du fond 107 de la partie 102 et le bord inférieur du bourrelet 14 est légèrement supérieure à la hauteur H2 entre la face supérieure du fond 10b et la face supérieure de la partie 1.

Ainsi, lorsque l'on empile plusieurs couvercles 103 les uns sur les autres, comme illustré sur la figure 11, c'est le fond 107, de la partie 102 d'un couvercle supérieur 103, qui est en appui contre le fond intermédiaire 10b du couvercle 103 immédiatement inférieur.

Le pas d'empilage est égal à la hauteur H3 entre la face inférieure du fond 107, et la face supérieure du fond 10b de la partie 1.

Ces remarques s'appliquent également aux réalisations des figures précédentes 3, 6 et 9 où le pas d'empilage H3 est illustré.

La solution de la figure 3, faisant intervenir une contre-dépouille, de même que celle de la figure 9, répond à l'exigence suivante .

Pour un diamètre A donné, qui n'est que légèrement inférieur au diamètre B, on peut, avec une contre-dépouille, avoir en partie haute de la paroi Q un diamètre D (Fig.2) plus petit. Le retour E de la paroi vers l'intérieur dans le sens radial améliore l'assise de la partie supérieure 1 et les conditions d'empilage ( voir figure 4).

Quelle que soit la réalisation, le couvercle formé après assemblage des parties 1 et 2, ou 1 et 102, présente une section transversale ayant une rigidité relativement élevée, soit en raison de la réalisation d'un corps creux N fermé dans le cas des figures 3 et 10, soit par la formation d'un corps creux annulaire 10a comme dans le cas de la figure 9, soit par la formation d'une nervure 7a parallèle à l'axe du couvercle comme dans le cas de la figure 6.

Le couvercle ainsi formé présente une bonne rigidité en torsion, de sorte qu'il peut être réutilisé de manière efficace, après rupture du scellage, pour la fermeture du récipient après chaque prélèvement.

La bonne aptitude des couvercles selon l'invention à l'empilage et au désempilage permet d'alimenter des machines automatiques, à cadence élevée, en limitant les risques de mauvais fonctionnement.

La structure du couvercle permet de réduire les épaisseurs des parties 1 et 2 ou 102 sans pour autant diminuer la rigidité du couvercle. Le poids de matière est diminué , et le coût s'en trouve réduit.

Lors du gerbage, comme illustré sur la figure 5, c'est-à-dire lors de la superposition de récipients R, R1 fermés par des couvercles selon l'invention, la charge appliquée sur un couvercle inférieur, par les récipients situés au-dessus, est localisée au voisinage de la périphérie interne du couvercle 1 qui présente toujours une zone d'assemblage entre les parties 1 et 2. Ainsi, la résistance au gerbage du couvercle est suffisante, même si le fond 7 reste écarté de la partie 1, en-dehors de la zone périphérique.

Avec un seul couvercle, c'est-à-dire un seul ensemble dont le bord périphérique est scellable, on remplit les fonctions assurées jusqu'à présent par deux éléments séparés à savoir un opercule scellé, et un couvercle suffisamment rigide pour pouvoir être séparé du récipient et réencliqueté après arrachement de l'opercule et après chaque prélèvement.

Le fait de réaliser la fermeture du récipient avec un seul ensemble entraîne des économies au niveau de l'achat, de la gestion des stocks, du coût des outillages de production et de la mécanisation.

L'abaissement du poids de matière a une incidence au niveau de l'écologie puisque la quantité de matière à traiter après usage se trouve également réduite. Un seul matériau peut convenir pour l'ensemble du couvercle.

La structure du couvercle selon l'invention permet d'utiliser des parties 1 et 2, ou 102, d'épaisseur relativement réduite ne dépassant pas 200 micromètres. Pour les matières plastiques on reste ainsi dans la catégorie film mince permettant une grande productivité.

Le couvercle conserve sa géométrie à l'ouverture.

Les couvercles de l'art antérieur ne répondent pas à l'ensemble de ces critères. Ils utilisent en général une feuille épaisse (épaisseur supérieure à 220 micromètres) pour limiter les incidents de désempilage et tenter de permettre le gerbage. Une telle épaisseur de feuille interdit un temps de scellage court (de l'ordre de 0,3-0,4 seconde selon l'invention). Avec les feuilles utilisées selon l'art antérieur, le temps de scellage le plus court obtenu est de l'ordre d'une seconde.

De plus, selon l'art antérieur, ce temps de scellage de l'ordre d'une seconde est généralement obtenu par une température de scellage et une pression excessives qui peuvent détériorer le pourtour du couvercle.

La solution de l'invention évite les risques d'encastrement des couvercles empilés, avant leur pose sur les récipients. Un tel encastrement de couvercles empilés conduit généralement à un incident au niveau de la machine automatique qui doit saisir le couvercle pour le mettre en place sur le récipient.

Or un incident sur une ligne ultrapropre, nécessitant une intervention humaine sur la ligne, se solde par un arrêt d'une dizaine à une vingtaine de minutes car, après rupture des conditions d'ultrapropreté du fait de l'entrée d'une personne dans la ligne pour la remise en marche de la machine, le temps de remise en condition d'asepsie de la ligne ultrapropre s'élève à plusieurs dizaines de minutes.

On mesure ainsi l'importance de la bonne aptitude à l'empilage et au désempilage des couvercles.

On peut noter, enfin, qu'il est possible de décorer les éléments du couvercle avant formage.

Il va de soi que de nombreuses variantes peuvent être apportées, notamment par substitution de moyens techniques équivalents, sans sortir pour cela du cadre de l'invention.

## Revendications

1. Couvercle, notamment pour récipient en matière plastique, constitué d'un élément (1) en film thermoscellable mince pelable, et d' un autre élément (2), les deux éléments étant assemblés l'un avec l'autre, l'élément en film thermoscellable (1) recouvrant au moins partiellement, d'un côté, l'autre élément (2) et débordant de celui-ci,
caractérisé en ce qu'il comporte une partie creuse (10) ouverte vers le haut avec un fond intermédiaire (10b; 2), et une zone d'appui inférieure (7,7a;10b) destinée, dans un empilage de couvercles, à reposer contre le fond intermédiaire d'un couvercle inférieur, la profondeur (H2) de la partie creuse (10) étant inférieure à la hauteur (H1) de la zone d'appui , le diamètre extérieur (A) de cette zone d'appui étant légèrement inférieur au diamètre intérieur (B) de la partie creuse (10).

2. Couvercle selon la revendication 1,
caractérisé en ce que les éléments (1, 2) sont assemblés par encliquetage dans des zones respectives (11, 12), en particulier du type bourrelet (11) et rainure (12) conjuguée.

3. Couvercle selon la revendication 1 ou 2,
caractérisé en ce que les éléments (1, 2) sont assemblés par soudage, en particulier lors de la pose du couvercle (3) sur un récipient (R) et du scellage de l'élément en film thermoscellable (1) sur une collerette (C) du récipient.

4. Couvercle selon l'une des revendications 1 à 3, caractérisé en ce que l'autre élément (2) constitue un élément inférieur, et que le fond de cet élément est surélevé pour venir en contact avec le fond de l'élément en film thermoscellable (1).

5. Couvercle selon l'une des revendication 1 à 3,
caractérisé en ce que le fond de l'autre élément (2) présente un moyen de préhension (8) en saillie, cet autre élément (2) se trouvant au-dessus du fond de l'élément (1) en film thermoscellable.

6. Couvercle selon la revendication 1,
caractérisé en ce qu'il comporte, sur sa périphérie, un bourrelet (14, 14a) propre à être inséré dans une gorge (15) du récipient (R) destiné à être fermé par ce couvercle.

7. Couvercle selon la revendication 6,
caractérisé en ce que le bourrelet (14a) est prévu à la périphérie de l'élément en film thermoscellable (1), l'intérieur de ce bourrelet (14a) définissant une rainure (13) dans laquelle est insérée la périphérie de l'autre élément (2).

8. Couvercle selon la revendication 7,
caractérisé en ce que l'autre élément (2) présente la forme d'un disque.

9. Couvercle selon la revendication 8,
caractérisé en ce qu'à la périphérie du disque, fait saillie sensiblement perpendiculairement au plan du disque une languette (2a).

10. Couvercle selon l'une des revendications précédentes, caractérisé en ce qu'une chambre (10a) est formée, après assemblage, entre les éléments (1, 2).

11. Couvercle selon l'une des revendications précédentes, caractérisé en ce qu'il est constitué d'un élément (1) en film thermoscellable mince pelable et d' un autre élément (2), les deux éléments (1, 2) étant assemblés et conformés selon une structure présentant une rigidité relativement élevée , alors que les éléments (1,2) ont une épaisseur relativement faible.

12. Couvercle selon la revendication 11,
caractérisé en ce que l'épaisseur cumulée des deux éléments (1,2) est inférieure à 220 micromètres.

13. Couvercle selon la revendication 11 ou 12,
caractérisé en ce qu'un corps creux (N,10a) est formé entre les deux éléments (1, 2), dont les fonds (10b,7) sont écartés l'un de l'autre, au moins dans des zones partielles, suivant une direction perpendiculaire à leur plan moyen.

14. Couvercle selon la revendication 11 ou 12,
caractérisé en ce qu'il comporte, sur sa partie inférieure,' une nervure périphérique (7a) dirigée vers le bas.

15. Couvercle selon la revendication 11 ou 12,
caractérisé en ce que les parois périphériques du couvercle sont des parois cylindriques de génératrices parallèles à l'axe du couvercle.

16. Récipient fermé par un couvercle selon l'une des revendications précédentes, caractérisé en ce que la partie de l'élément (1) en film thermoscellable, qui déborde de l'autre élément (2), est seule soudée à une collerette (C) du récipient.

17. Récipient selon la revendication 16,
caractérisé en ce que sa paroi comporte une rainure d'encliquetage (15) du couvercle permettant, après retrait du couvercle (3,103) pour prélèvement d'une partie du contenu du récipient, de remettre en place le couvercle et d'assurer une fermeture du récipient.

## Claims

1. Lid, particularly for a container made of plastic, consisting of an element (1) made of peelable thin heat-sealing film and of another element (2), the two elements being assembled with one another, the heat-sealing film element (1) at least partially covering the other element (2) on one side and protruding beyond it,
characterized in that it comprises a hollow part (10) which is open upwards with an intermediate bottom (lOb; 2) and a lower bearing zone (7, 7a; 10b) intended, in a stack of lids, to rest against the intermediate bottom of a lower lid, the depth (H2) of the hollow part (10) being smaller than the height (H1) of the bearing zone, the outside diameter (A) of this bearing zone being slightly smaller than the inside diameter (B) of the hollow part (10).

2. Lid according to Claim 1, characterized in that the elements (1, 2) are assembled by snap-fastening in respective zones (11, 12) particularly of the bulge (11) and mating groove (12) type.

3. Lid according to Claim 1 or 2, characterized in that the elements (1, 2) are assembled by welding, particularly when the lid (3) is fitted onto a container (R) and the heat-sealing film element (1) is sealed onto a rim (C) of the container.

4. Lid according to one of Claims 1 to 3,
characterized in that the other element (2) constitutes a lower element and that the bottom of this element is raised so as to come into contact with the bottom of the heat-sealing film element (1).

5. Lid according to one of Claims 1 to 3,
characterized in that the bottom of the other element (2) has a protruding means (8) for grasping, this other element (2) being above the bottom of the heat-sealing film element (1).

6. Lid according to Claim 1, characterized in that it comprises, on its periphery, a bulge (14, 14a) capable of being inserted into a groove (15) of the container (R) intended to be closed by this lid.

7. Lid according to Claim 6, characterized in that the bulge (14a) is provided at the periphery of the heat-sealing film element (1), the inside of this bulge (14a) defining a groove (13) in which the periphery of the other element (2) is inserted.

8. Lid according to Claim 7, characterized in that the other element (2) is in the shape of a disc.

9. Lid according to Claim 8, characterized in that a tab (2a) projects at the periphery of the disc, practically at right angles to the plane of the disc.

10. Lid according to one of the preceding claims,
characterized in that a chamber (10a) is formed, after assembly, between the elements (1, 2).

11. Lid according to one of the preceding claims,
characterized in that it consists of a peelable thin heat-sealing film element (1) and of another element (2), the two elements (1, 2) being assembled and shaped into a structure with relatively high rigidity, whereas the elements (1, 2) have a relatively small thickness.

12. Lid according to Claim 11, characterized in that the cumulative thickness of the two elements (1, 2) is less than 220 micrometres.

13. Lid according to Claim 11 or 12, characterized in that a hollow body (N, 10a) is formed between the two elements (1, 2), the bottoms (lOb, 7) · of which are separated from one another, at least in partial zones, in a direction perpendicular to their mean plane.

14. Lid according to Claim 11 or 12, characterized in that on its lower part it comprises a peripheral rib (7a) directed downwards.

15. Lid according to Claim 11 or 12, characterized in that the peripheral walls of the lid are cylindrical walls with generatrices parallel to the axis of the lid.

16. Container closed by a lid according to one of the preceding claims, characterized in that the part of the heat-sealing film element (1) which extends beyond the other element (2) is the only thing welded to a rim (C) of the container.

17. Container according to Claim 16, characterized in that its wall comprises a groove (15) for the snap-fastening of the lid making it possible, once the lid (3, 103) has been removed in order to extract some of the contents of the container, for the lid to be put back on and for the container to be closed.

## Patentansprüche

1. Deckel, insbesondere für einen Behälter aus Kunststoff, der aus einem Element (1) aus dünner, heißsiegelbarer, abziehbarer Folie und einem weiteren Element (2) besteht, wobei die beiden Elemente miteinander verbunden sind, wobei das Element (1) aus heißsiegelbare Folie zumindest teilweise an einer Seite das andere Element bedeckt und über dieses vorsteht,
dadurch gekennzeichnet, daß er einen hohlen, nach oben offenen Bereich (10) mit einem Zwischenboden (10b; 2) und eine untere Auflagezone (7, 7a; 10b) aufweist, die in einem Stapel von Deckeln gegen den Zwischenboden eines unteren Deckels anliegt, wobei die Tiefe (H2) des hohlen Bereichs (10) geringer ist als die Höhe (H1) der Auflagezone, wobei der Außendurchmesser (A) dieser Auflagezone geringfügig unter dem Außendurchmesser (B) des hohlen Bereichs (10) liegt.

2. Deckel nach Anspruch 1, dadurch gekennzeichnet, daß die Elemente (1, 2) durch Einklinken in entsprechenden Zonen (11, 12) miteinander verbunden werden, die insbesondere von der Art einander zugeordnete Wulst (11) und Nut (12) sind.

3. Deckel nach Anspruch 1 oder 2, dadurch gekennzeichnet, daß die Elemente (1, 2) durch Schweißen miteinander verbunden werden, insbesondere beim Aufbringen des Deckels (3) auf einen Behälter (R) und beim Versiegeln des Elements (1) aus heißsiegelbarer Folie auf einem Kragen (C) des Behälters.

4. Deckel nach einem der Ansprüche 1 bis 3, dadurch gekennzeichnet, daß das andere Element (2) ein unteres Element bildet und daß der Boden dieses Elements überhöht ist, um mit dem Boden des Elements (1) aus heißsiegelbarer Folie in Kontakt zu gelangen.

5. Deckel nach einem der Ansprüche 1 bis 3, dadurch gekennzeichnet, daß der Boden des anderen Elements (2) ein vorstehendes Greifmittel (8) aufweist, wobei dieses andere Element sich oberhalb des Bodens des Elements (1) aus heißsiegelbarer Folie befindet.

6. Deckel nach Anspruch 1, dadurch gekennzeichnet, daß er an seinem Umfang einen Wulst (14, 14a) aufweist, der in eine Kehle (15) des Behälters (R) eingefügt wird, der von diesem Deckel verschlossen wird.

7. Deckel nach Anspruch 6, dadurch gekennzeichnet, daß der Wulst (14a) am Umfang des Elements aus heißsiegelbarer Folie (1) vorgesehen ist, wobei die Innenseite dieses Wulsts (14a) eine Nut (13) bildet, in die der Umfang des anderen Elements (2) eingefügt wird.

8. Deckel nach Anspruch 7, dadurch gekennzeichnet, daß das andere Element (2) scheibenförmig ist.

9. Deckel nach Anspruch 8, dadurch gekennzeichnet, daß am Umfang der Scheibe eine Zunge (2a) im wesentlichen senkrecht zur Ebene der Scheibe vorsteht.

10. Deckel nach einem der vorhergehenden Ansprüche, dadurch gekennzeichnet, daß nach dem Zusammenbau zwischen den Elementen (1,2) eine Kammer (10a) ausgebildet ist.

11. Deckel nach einem der vorhergehenden Ansprüche, dadurch gekennzeichnet, daß er aus einem dünnen, heißsiegelbaren, abziehbaren Element (1) und einem weiteren Element (2) besteht, wobei die beiden Elemente (1, 2) gemäß einer Struktur zusammengebaut und ausgebildet sind, die eine relativ hohe Steifheit aufweist, während die Elemente (1, 2) eine relativ geringe Stärke aufweisen.

12. Deckel nach Anspruch 11, dadurch gekennzeichnet, daß die kumulierte Stärke der beiden Elemente (1, 2) geringer ist als 220 µm.

13. Deckel nach Anspruch 11 oder 12, dadurch gekennzeichnet, daß ein hohler Körper (N, 10a) zwischen den beiden Elementen (1, 2) ausgebildet ist, deren Böden (10b, 7) zumindest in Teilzonen gemäß einer Richtung senkrecht zu ihrer Mittelebene zueinander beabstandet sind.

14. Deckel nach Anspruch 11 oder 12, dadurch gekennzeichnet, daß er in seinem unteren Bereich eine nach unten gerichtete Umfangsrippe (7a) aufweist.

15. Deckel nach Anspruch 11 oder 12, dadurch gekennzeichnet, daß die Umfangswände des Deckels zylindrische Wände mit Mantellinien sind, die parallel zur Achse des Deckels verlaufen.

16. Behälter, der von einem Deckel gemäß einem der vorhergehenden Ansprüche verschlossen wird, dadurch gekennzeichnet, daß der Bereich des Elements (1) aus heißsiegelbarer Folie, der über das andere Element (2) vorsteht, an einen Kragen (C) des Behälters geschweißt wird.

17. Behälter nach Anspruch 16, dadurch gekennzeichnet, daß seine Wand eine Einklinknut (15) für den Deckel aufweist, die es nach dem Entfernen des Deckels (3, 103) zur Entnahme eines Teils des Behälterinhalts ermöglicht, den Deckel wieder einzusetzen und ein Verschließen des Behälters zu gewährleisten.
